(19) 

**Europäisches Patentamt**

**European Patent Office**

**Office européen des brevets**

(11) **EP 4 164 833 B1**

(12) **EUROPEAN PATENT SPECIFICATION**

(45) Date of publication and mention
of the grant of the patent:
**11.12.2024 Bulletin 2024/50**

(21) Application number: **21737344.8**

(22) Date of filing: **15.06.2021**

(51) International Patent Classification (IPC):
**B23K 26/244** (2014.01)   **B23K 26/324** (2014.01)
**B23K 26/57** (2014.01)

(52) Cooperative Patent Classification (CPC):
**B23K 26/57; B23K 26/244; B23K 26/324;**
B23K 2103/56

(86) International application number:
**PCT/EP2021/066129**

(87) International publication number:
**WO 2021/255035 (23.12.2021 Gazette 2021/51)**

(54) **METHOD AND SYSTEM FOR LASER WELDING OF A SEMICONDUCTOR MATERIAL**

VERFAHREN UND SYSTEM ZUM LASERSCHWEISSEN EINES HALBLEITERMATERIALS

PROCÉDÉ ET SYSTÈME DE SOUDAGE AU LASER D'UN MATÉRIAU SEMI-CONDUCTEUR

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **16.06.2020   DE 102020115878**

(43) Date of publication of application:
**19.04.2023   Bulletin 2023/16**

(73) Proprietors:
• **Friedrich-Schiller-Universität Jena
07743 Jena (DE)**
• **Fraunhofer-Gesellschaft zur Förderung
der angewandten Forschung e.V.
80686 München (DE)**

(72) Inventors:
• **CHAMBONNEAU, Maxime
07749 Jena (DE)**
• **NOLTE, Stefan
07751 Jena (DE)**
• **LI, Qingfeng
07745 Jena (DE)**

(74) Representative: **Schneiders & Behrendt Bochum
Gerard-Mortier-Platz 6
44793 Bochum (DE)**

(56) References cited:
**EP-A1- 2 745 975        US-A1- 2013 068 384
US-A1- 2013 256 285**

**Description**

FIELD OF THE INVENTION

The invention relates to the field of laser welding. It concerns a method and a system for welding a first workpiece to a second workpiece by means of a laser.

BACKGROUND OF THE INVENTION

The advent of ultrafast pulsed laser sources (with pulse durations <20 ps) enabled laser welding technologies for selectively bonding two workpieces in the spatial region around the interface between the two workpieces. Typical materials involved in such laser welding technologies are transparent materials:

- glass and metal (see for example G. Zhang and G. Cheng, "Direct welding of glass and metal by 1 kHz femtosecond laser pulses," Applied Optics, Vol. 54, No. 30, pp. 8957-8961, 2015);

- glass and semiconductor (see for example G. Zhang et al., "Femtosecond laser Bessel beam welding of transparent to non-transparent materials with large focal-position tolerant zone," Optics Express, Vol. 26, No. 2, pp. 917-926, 2018);

- glass and glass (see for example S. Richter et al., "Toward laser welding of glasses without optical contacting," Applied Physics A, Vol. 121, No. 1, pp. 1-9, 2015),

- transparent materials in general (see for example US 2013/0068384 A1);

- polymer and polymer (see for example S. Mingareev et al., "Welding of polymers using a 2 $\mu$m thulium fiber laser," Optics & Laser Technology, Vol. 44, No. 7, pp. 2095-2099, 2012).

However, to date no laser welding involving a semiconductor material and an opaque material - especially silicon on metal - has been demonstrated. Such a laser welding technology would pave the way for three-dimensional (3D), fast and contactless fabrication of a broad range of devices in microelectronics, micromechanics, photovoltaics, Internet-of-Things (IoT) sensors, etc.

Two main reasons can be identified for the fact that such a welding technology does not exist until today. A first reason is that most semiconductor materials are transparent in the near- and mid- infrared region of the electromagnetic spectrum only. High-power ultrashort pulse lasers emitting light in this spectral region have emerged only very recently with the development of, e.g., optical parametric amplifiers, and fiber lasers (e.g., Er-doped, Tm-doped). Secondly, unlike for transparent materials, recent investigations have demonstrated that inducing permanent modifications with ultrashort pulses inside semiconductors or at their exit surface is extremely challenging (see for example M. Chanal et al., "Crossing the threshold of ultrafast laser writing in bulk silicon," Nature Communications, Vol. 8, No. 773, 2017). This uncommon material behavior mainly results from the competition between the Kerr-induced self-focusing effect on the one hand, and plasma absorption and defocusing effects on the other hand (see for example M. Chambonneau et al., "Competing Nonlinear Delocalization of Light for Laser Inscription Inside Silicon with a 2-$\mu$m Picosecond Laser," Physical Review Applied, Vol. 12, No. 2, pp. 024009, 2019). As a consequence, the maximum energy deposited in the material is not only saturated but also strongly delocalized (see for example E. V. Zavedeev et al., "Delocalization of femtosecond laser radiation in crystalline Si in the mid-IR range," Laser Physics, Vol. 26, No. 1, pp. 016101, 2016).

EP 2 745 975 A1 discloses a system for laser welding of two workpieces, in which the focus of the laser beam is varied along the beam direction. A measuring unit is provided that measures a displacement of the focus. On this basis, the laser beam passing through one of the workpieces is controlled to have its focal point in the common surface of the two workpieces. The energy of the laser beam thus melts material of the two workpieces, and the two workpieces are welded together.

SUMMARY OF THE INVENTION

From the foregoing it is readily appreciated that there is a need for an improved laser welding technique. It is an object of the invention to provide a reliable, repeatable and reproducible approach for laser welding of two workpieces one of which consists of a semiconductor material.

In accordance with the invention, a method for welding a first workpiece to a second workpiece by means of a laser is disclosed. The method comprises the steps of:

- irradiating the first workpiece with a beam of pulsed laser radiation, wherein the first workpiece consists of a semiconductor material which is transparent at the wavelength of the laser radiation, so that the beam enters the first workpiece through an entrance surface of the first workpiece and leaves it through an exit surface of the first workpiece, the geometric focus of the beam being positioned in the plane of the exit surface;

- determining a delocalization of the focus caused by nonlinear interaction of the laser radiation with the semiconductor material;

- placing the second workpiece against the first workpiece; and

- again irradiating the first workpiece with the laser beam of pulsed laser radiation, the focus of the laser radiation being positioned along the beam direction taking into account the determined delocalization so that the intensity maximum is located in the plane of the exit surface forming the interface of the two workpieces, whereby the first workpiece is welded to the second workpiece.

A permanent modification at the interface between the two workpieces is achieved by the approach of the invention with the exit surface of the semiconductor workpiece being mechanically and/or optically in contact with the second workpiece. The laser flux is absorbed to a maximum extent at the interface between the two workpieces as a re-localization procedure of the intensity maximum is performed so as to compensate for the nonlinear propagation of the laser beam through the semiconductor workpiece. The laser welding process is optimized by this approach in terms of bonding strength.

The method of the invention is divided into two main sections. In the first, preparatory section, the first workpiece is irradiated with the pulsed laser radiation with the radiation being focused at the exit surface of the first workpiece, which is to form the interface with the second workpiece. Due to the nonlinear interaction of the laser pulses with the transparent semiconductor material an intensity delocalization occurs, i.e., a shift of the intensity maximum along the beam path to a position upstream of the actual geometric focus at the exit surface. This delocalization is determined in the first section of the method of the invention, e.g. by measuring the variation of the intensity of the irradiated laser radiation along the beam path to find the position of maximum intensity within the first workpiece. In the second section, the actual welding process takes place. To this end the second workpiece is placed against the first workpiece at its exit surface. The two workpieces may be maintained in position either with or without a suitable assembling method such as optical contact or mechanical fixture (e.g., glue). The focus of the laser beam is re-positioned along the beam path taking the measured delocalization into account such that the intensity maximum is located precisely in the plane of the interface between the two workpieces. The assembly of the two workpieces is then irradiated in this corrected configuration such that the delocalization is compensated for, and the two workpieces are firmly bonded.

The term "welding" within the meaning of the invention refers to any process providing a laser-induced bond between the two workpieces, i.e. a force maintaining the two workpieces in mechanical contact.

According to a preferred embodiment, the laser radiation is formed by a single pulse or a pulse train with a pulse duration between 1 fs and 100 ns. A pulse train is defined as a group of several individual pulses temporally separated. For simplicity, the term "pulse" is used herein both for a laser irradiation constituted by a single laser pulse or a train of laser pulses. The intensity of a single pulse is defined as $I=2E/[\tau\pi(w_0)^2]$, where E in the

pulse energy, $\tau$ is the pulse duration taken at full-width at half-maximum, $w_0$ is the beam radius at the focus (taken at an intensity drop of $1/e^2$) in the case of a bell-shaped beam (e.g., a Gaussian beam). If the laser irradiation is constituted by a pulse train, the duration of the irradiation corresponds to the time interval starting with the maximum intensity of the first laser pulse and ending with the maximum intensity of the last laser pulse; and the pulse energy is defined as the average power during the train multiplied by the duration of the train.

According to another preferred embodiment, the parameters of the laser radiation, specifically the spectrum, the pulse duration, the beam size, as well as the pulse energy, are identical during the determination of the delocalization and during welding the first workpiece to the second workpiece. By choosing identical parameters during the first (preparatory) and second (welding) section of the method of the invention it is made sure that the determined delocalization of the intensity maximum corresponds to the delocalization during the actual welding procedure. In other words, the selection of identical radiation parameters during both sections ensures that the intensity maximum of the laser radiation is located precisely at the interface between the two workpieces so as to obtain an optimal bond.

According to yet another preferred embodiment, the material of the second workpiece is opaque at the wavelength of the laser radiation. The method of the invention is particularly well suited for welding a transparent semiconductor material to material (e.g. a metal) that is opaque at the wavelength of the laser radiation. In this case, the laser radiation is absorbed at the interface between the two workpieces and thus induces a material modification during the welding process. Transparency and opacity of a workpiece are defined by comparing the photon energy of the laser radiation (at a given wavelength) with the band gap of the material of the respective workpiece. The term "semiconductor" refers to a band gap material, i.e., a material with a valence band and a conduction band separated by an energy range where no electron state exists (in the ideal case of defect-free semiconductor) and where the Fermi level is located. Both the valence and the conduction band are close enough to this level so they are populated with electrons or holes. Defining the photon energy $hc/\lambda$ of the laser radiation employed for the laser welding process, where $h\approx6.62607015\times10^{-34}$ J·s is the Planck's constant, $c=2.99792458\times10^8$ m/s is the speed of light in vacuum, and $\lambda$ is the laser wavelength (expressed in meters), the band gap of the semiconductor material $\Delta_1$ (expressed in Joules), and the band gap of the opaque material $\Delta_2$ (expressed the same units as $\Delta_1$), the wavelength $\lambda$ of the laser radiation is preferably selected in the interval satisfying:

$$\Delta_2 \leq hc/\lambda < \Delta_1.$$

In the following, for sake of convenience, the band gap values are given in electron-volts (1 eV ≈ 1,6022 ×10⁻¹⁹ J). The method of the invention can advantageously be applied, for example, for welding a silicon workpiece ($\Delta_1$=1.12 eV) to a copper workpiece ($\Delta_2$=0 eV) at $\lambda$=1555 nm, or for welding a silicon workpiece ($\Delta_1$=1.12 eV) to a germanium workpiece ($\Delta_2$=0.67 eV) at $\lambda$=1300 nm.

The placing of the second workpiece against the first workpiece may involve an optical contact, a loose stacking, or a mechanical fixturing, as appropriate in terms of workpiece condition, i.e., surface roughness, workpiece size etc.

Preferably, the assembly formed by the two workpieces is relatively moved in a plane perpendicular with respect to the laser beam during the welding process to create a welding pattern. The number of laser pulses per welding point of the welding pattern may be controlled by controlling the repetition rate of the laser and/or the speed of the relative movement of the laser beam and the workpieces during welding. Moreover, the beam size at the interface between the two workpieces and the laser intensity per pulse may be varied for optimizing the bonding force between the two workpieces. For example, a gradual increase of the laser intensity at the interface between the two workpieces starting from a predetermined value may be useful to obtain a maximum bonding force. A multi-scan welding procedure may be useful, with or without a variation of the laser intensity between different scans of the same zone at the interface between the two workpieces.

More generally, the focus of the laser radiation is moved along the interface between the two workpieces to create a welding pattern. This may involve a simultaneous relative movement of the laser beam and the assembly of the two workpieces along the optical axis as well as along the axes perpendicular thereto.

The method of the invention described thus far can be carried out by means of a system for welding a first workpiece to a second workpiece, comprising:

- a laser device configured to generate a beam of pulsed laser radiation;
- a beam controlling device configured to direct the beam through the first workpiece so that the beam enters the first workpiece through an entrance surface and leaves it through an exit surface forming the interface between the first and the second workpiece, and to focus the beam at a focus position along the beam path;
- a measuring device configured to determine a delocalization of the focus caused by nonlinear interaction of the laser radiation with the semiconductor material; and
- a positioning device configured to position the assembly of the two workpieces and the focus of the laser beam relative to each other, along the direction of the laser beam and in the plane perpendicular thereto, wherein the measuring device comprises a microscope arranged on the side of the exit surface of the first workpiece, the observation direction of the microscope being opposite to the propagation direction of the laser beam.

The positioning device enables the intensity maximum of the laser radiation to be positioned at the interface between the two workpieces based on the determined delocalization of the focus. The positioning device further enables the relative movement of the assembly of the two workpieces in the plane perpendicular to the laser beam during welding, e.g. for generating a suitable welding pattern by scanning the laser beam across the assembly formed by the two workpieces. The positioning device may comprise galvanometer mirrors, scanning mirrors, a beam steering phased array, a translation stage, a rotation stage and/or a piezoelectric stage.

The measuring device comprises a microscope arranged on the side of the exit surface of the first workpiece, the observation direction of the microscope being essentially opposite (anti-parallel) to the propagation direction of the laser beam. This also includes a variant in which a small angle (e.g., in the range of 0-10°) is introduced between the observation direction of the microscope and the propagation direction of the laser beam). The microscope may comprise an objective lens and a camera. The intensity variation along the beam path can be imaged/scanned by moving relatively the focal plane of the microscope along the beam path within the material of the first workpiece to determine the position of maximum intensity.

According to a preferred embodiment, the beam controlling device is configured to control the parameters of the laser radiation, specifically the spectrum, the pulse duration, the temporal pulse shape, the beam size, the polarization and/or the pulse energy. In possible embodiments, the beam controlling device is constituted by a number of sub-modules. A sub-module used for focusing the laser radiation may comprise objective lenses, spherical lenses, aspherical lenses, F-Theta lenses, cylindrical lenses, and/or parabolic mirrors. Moreover, a further sub-module of the beam controlling device may comprise an optical parametric amplifier, an optical parametric oscillator, a frequency converting crystal for controlling the wavelength of the laser radiation. Yet another sub-module may comprise a stretcher based on a combination of dispersive elements such as gratings or prisms for controlling the pulse duration. A sub-module comprising a spatial light modulator may be employed for controlling the spatial distribution of the laser beam, a Keplerian or a Galilean telescope made of a combination of lenses and/or parabolic mirrors may be used as a further sub-module for controlling the beam size. A sub-module comprising a combination of polarizers and/or waveplates may be employed for controlling the polarization of the laser beam, and/or a combination of waveplates, polarizers and/or neutral density filters may constitute a sub-module for controlling the pulse energy. The pulse energy, polarization and repetition rate may be controlled using an acousto-optic modulator (AOM) or an electro-optic modulator (EOM).

According to yet another preferred embodiment, the system further comprises an observation device configured to inspect the entrance surface of the first workpiece. The observation device makes it possible, e.g., to observe concomitance of the entrance surface of the first workpiece with the geometric focus of the laser beam such that the precise relative position of the workpiece and the focus can be determined. The observation device may comprise a dark-field or a bright-field microscope or a phase-contrast microscope working either in transmission or reflection.

According to a further preferred embodiment, the system comprises a conditioning device configured to control the ambient conditions of the assembly of the two workpieces. The conditioning device controls the environment of the welding process in terms of chemical composition, pressure and temperature. It may include a gas-tight chamber in which the assembly of the two workpieces is arranged, wherein the chamber can be connected to a vacuum pump and to one or more gas reservoirs to establish a desired gas composition within the chamber. A heating device (an oven) may be used to control the ambient temperature during welding.

It should be noted that the two workpieces are subject to the welding process carried out by the system of the invention and are therefore not part or component of the system itself.

BRIEF DESCRIPTION OF THE DRAWINGS

The enclosed drawings disclose preferred embodiments of the present invention. It should be understood, however, that the drawings are designed for the purpose of illustration only and not as a definition of the limits of the invention. In the drawings:

Figure 1    schematically shows a system for carrying out the method of the invention;

Figure 2    schematically shows the measuring device of the system for determining the shift of the position of the maximum intensity along the optical axis;

Figure 3    shows a diagram illustrating the focus delocalization as a function of laser pulse energy and duration;

Figure 4    shows the method of the invention as a flow chart.

DETAILED DESCRIPTION OF THE EMBODIMENTS

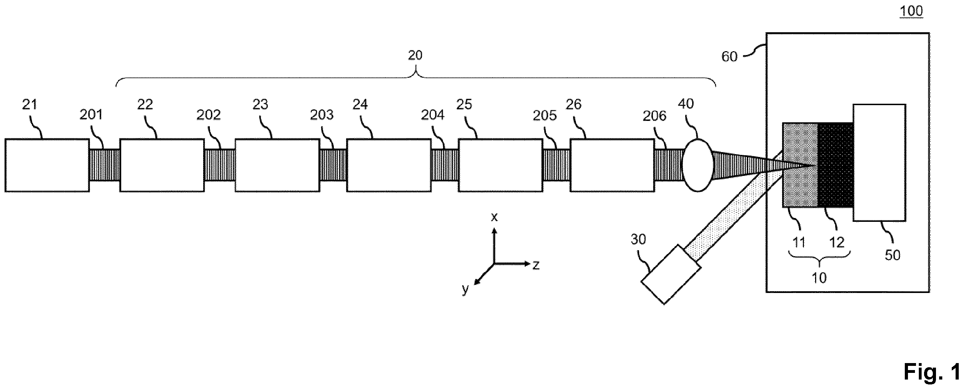

With reference to Figure 1, a system 100 for welding a first workpiece 11 to a second workpiece 12 is shown as a block diagram. The first workpiece 11 consists of a semiconductor material, e.g. silicon. The material of the second workpiece is a metal, e.g. copper. The two workpieces 11, 12 may or may not be in optical contact at their common interface. The optional optical contact can be established by introducing a suitable fluid within the gap between the two workpieces 11, 12, such as, e.g., methanol, ethanol, etc. The workpieces 11, 12 can be maintained in contact by means of any common mechanical fixturing method.

The laser welding system 100 includes in particular a laser device 21, e.g. a mode locked fiber laser in combination with one or more optical amplification stages, which emits pulsed laser radiation 201 with given properties in terms of spatial and temporal distribution, polarization, energy, spectrum, repetition rate, etc. A beam controlling device 20 is provided for controlling the characteristics of the laser pulses 201 in terms of wavelength, pulse duration, temporal pulse shape, repetition rate, spatial distribution of the beam, beam size, pulse energy, and polarization before being directed through the first workpiece 11. The beam controlling device 20 comprises several sub-modules 22-26 for controlling the pulse characteristics and a focusing optics 40 to focus the laser beam, which enters through an entrance surface of the workpiece 11 and leaves it through an exit surface forming the interface between the two workpieces 11, 12, with the geometric focus being set at a location along the beam path. The focusing optics 40 can include, e.g., an objective lens, a convex single lens, a parabolic mirror, an aspherical lens, an F-Theta lens, a cylindrical lens, etc.

The relative position of the assembly 10 of the two workpieces 11, 12 with respect to the incoming focused beam is adjusted by a positioning device 50 (e.g., a translation stage, a rotation stage, a piezoelectric stage, or a combination of these) enabling the displacement of the assembly 10 in the direction of the laser beam (in order to adapt the position of the geometric focus) as well as in the plane perpendicular thereto. For adapting the focus position further components may be used, such as an F-Theta lens, galvanometer mirrors, a beam steering phased array etc. (not depicted). The three-dimensional control of the relative position of the beam with respect to the assembly 10 makes it possible to carry out the welding procedure along a predefined welding pattern. The welding pattern is determined by a scanning strategy to obtain, e.g., a point-by-point pattern, a line-by-line pattern, a concentric circle pattern, a spiral pattern, single-scan, multi-scan with or without increase in laser intensity between the scans, etc. Ideally, the scanning speed during welding is between 1 nm/s and 10 m/s. The welding pattern can be chosen as a function of the amount of energy deposited per point of the welding pattern at the interface between the two workpieces 11, 12 which mainly depends on the laser repetition rate, pulse energy, and beam size.

The system 100 further comprises an observation device 30 for inspecting at least one of the surfaces of the first workpiece 11. The observation device 30 can be, e.g., an optical bright-field or dark-field microscope either working in transmission or in reflection, with or without phase contrast. The observation device 30 enables monitoring of the interaction of the laser radiation at the respective surface of the first workpiece 11 for precise calibration of the positioning of the geometric focus of the laser beam relative to the surfaces of the workpiece 11. The system 100 further includes a conditioning device 60 for controlling the ambient conditions of the welding process in terms of chemical composition, pressure, and temperature. The conditioning device 60 includes, for example, a chamber with a valve for gas injection, a vacuum chamber connected to vacuum pumps, an oven, etc.

As mentioned above, the beam controlling device 20 includes optional sub-modules 22-26 for tailoring the laser pulse properties. The first optional sub-module 22 is provided for controlling the wavelength, and, more generally, the spectral characteristics of the pulses. Module 22 can be, for example, an optical parametric amplifier (OPA), an optical parametric oscillator (OPO), a frequency doubling crystal, etc. The wavelength of the pulses 202 at the output of module 22 has to be adjusted so that workpiece 11 is transparent at this wavelength, whereas workpiece 12 is opaque at this wavelength. As an example, an adjusted wavelength of 1.55 $\mu$m is appropriate if the material of workpiece sample 11 is crystalline silicon, and the material of workpiece 12 is a metal (e.g., copper, gold, silver, aluminum, etc.). The second optional module 23 is provided for controlling the temporal shape of the laser pulses, in accordance with a predefined welding pattern. For an irradiation composed of single-pulses, or a pulse train, the module 23 can decrease the repetition rate of the pulses 202, and can be, for example, an optical beam shutter, an optical chopper, a Pockels cell, an acousto-optic modulator (AOM), etc. Secondly, the module 23 gives access to the control of the pulse duration, and can be, for example, a stretcher or a compressor composed of a combination of various dispersive elements such as diffraction gratings or prisms, or a pulse stretcher based on group velocity dispersion in a given material. The third optional module 24 is provided for controlling the spatial distribution of the beam. It can increase or decrease the beam size, e.g., by means of a Galilean or a Keplerian telescope, and, more generally, any afocal system. Secondly, module 24 can change the beam profile (i.e., the spatial beam distribution) from the beam at the input 203 to the output 204. E.g., module 24 can be able to generate Gaussian, tophat (i.e., uniform in intensity), Bessel or vortex beams. Module 24 can include an axicon, phase plates, a spatial light modulator, etc. The fourth optional module 25 enables the control of the polarization of the laser beam, i.e., the direction of the electric field of the laser. Module 25 can include, for example, wave plates (half-wave plate, quarter-wave plate), polarizers (e.g., linear polarizer, radial polarizer, electro-optic modulator), etc. The fifth and last optional module 26 is provided for the control of the pulse energy by decreasing the beam power from the entrance 205 to the exit 206 of this module. The attenuation in pulse energy can be carried out with, for example, an optical attenuator, neutral density filters, the combination of a half-wave plate and a polarizer (the control of the energy is achieved by rotating the half-wave plate in this case), etc. If all the aforementioned optional modules 22-26 of the beam controlling device 20 are used, the spectral, temporal, spatial, polarization and energy characteristics of the beam 206 can be optimally tailored. The sequence of the sub-modules 22-26 may be modified as required.

The laser pulse energy can be estimated by applying an energy calibration procedure. This procedure consists of measuring the average power of the laser radiation, e.g. using a power meter, between the focusing optics 40 and the workpiece 11. The corresponding pulse energy can be easily determined by calculating the ratio between the measured average power value (in Watts) and the repetition rate of the laser (i.e., the number of laser pulses per second, in Hertz). Furthermore, the energy after propagation through the entrance surface of the workpiece 11 can be estimated by multiplying the pulse energy with the Fresnel transmission coefficient calculated from the refractive indices of the environment and the workpiece 11, the laser polarization and the angle of incidence of the laser beam.

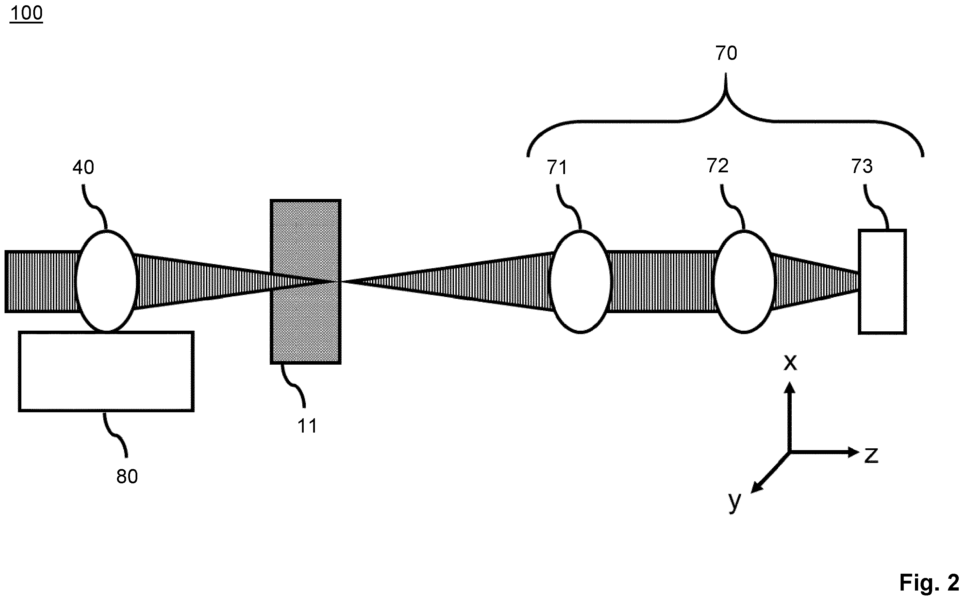

Figure 2 shows a depiction of the measuring device 70 of the system 100. The measuring device 70 is used to measure the variation of the intensity of the laser radiation along the beam path within the first workpiece 11 to determine a delocalization of the focus caused by nonlinear interaction of the laser radiation with the semiconductor material of workpiece 11. This measuring procedure is carried out before the actual welding. The measuring procedure includes the focusing of the laser beam with identical beam parameters as used in welding (in terms of spectrum, temporal profile, pulse duration, spatial distribution of the beam, beam size, polarization, and pulse energy). The laser beam is initially focused on the exit surface of the first workpiece 11 that has to be laser welded to the second workpiece 12 (Figure 1) afterwards. The measuring device 70, a microscope collinear to the optical axis Z and directed oppositely to the laser beam direction, enables imaging of the exit surface of the workpiece 11. Due to the fact that the imaging system 70 is also centered on the beam focused by the focusing system 40, the measuring device 70 is able to image the spatial distribution of the beam intensity at the exit surface of workpiece 11. In the depicted embodiment, the measuring device 70 is composed of a collecting optics 71 whose numerical aperture (NA) is ideally higher than the one of the focusing optics 40 for ensuring to collect all angular components of the incoming light. The collecting optics 71 can be, for example, an infinity-corrected objective lens. In this way, the beam is collimated after being collected by the focusing optics 40. An optional tube optics 72 is provided to refocus the collimated light onto a camera 73 that can be equipped, for example, with a bandpass filter for ensuring that only the light at the wavelength of the laser radiation is detected. This filter can be particularly relevant in the case of third-harmonic generation in the material, as well as for blocking most of the ambient light. When a finite-corrected objective lens is employed in the collecting optics 71, the tube optics 72 can be bypassed and the beam is directly refocused on the camera 73. Ideally, for optimized dynamic range, the camera 73 has a linear response at the wavelength of the incoming laser. Moreover, the image on the camera 73 should not show any saturated pixels during measurement. The system 100 further includes a linear translation stage 80 enabling relative displacement of the focusing optics 40 only along the optical axis Z, upstream as well as downstream along the laser beam path. In a possible alternative embodiment (not depicted), the translation stage 80 enables the workpiece 11 and the measuring device 70 to move together along the optical axis Z, with a fixed position of the focusing optics 40. The arrangement shown in Figure 2 enables to image the spatial distribution of the incoming laser light in the (X,Y) plane for various relative positions of the focus along the optical axis Z with respect to the exit surface of the workpiece 11. By repeated alternating movements of the focusing optics 40 and image acquisitions using the measuring device 70 the intensity variation of the laser beam propagating through the first workpiece 11 can be determined in the (X,Z) and (Y,Z) planes.

A first beam propagation imaging procedure can be carried out at a pulse energy for which the beam propagation is linear, i.e. without nonlinear interaction of the laser radiation with the semiconductor material of the first workpiece 11 (typically at a pulse energy between 1 fJ and 20 pJ, depending on the sensitivity of the camera 73). The energy can be attenuated to such a low level by means of, for example, neutral density filters of module 26 (see Figure 1). Then, the same measurement is performed at the pulse energy at which the welding procedure is to be carried out. The intensity corresponding to this pulse energy has to be sufficient for inducing a material modification at the interface between the two workpieces 11, 12 during the laser welding procedure. Due to the fact that this increased intensity will not be sufficient for inducing a modification of the material of the first workpiece 11 (being transparent at the wavelength of the laser radiation), neither at the exit surface nor in the bulk material, the measurement of the intensity variation under nonlinear propagation of the laser beam at the higher pulse energy is reliable and repeatable. The linear and the nonlinear propagation images acquired by measuring device 70 can be analyzed to determine the position of maximum pixel amplitude along the optical axis Z (which is related to the maximum fluence and intensity of the laser beam). The difference between the positions of maximum intensity along the optical axis Z in the linear and nonlinear propagation cases (designated herein below as $\Delta Z$) can be derived from a comparison of the two images. At pulse energies required for welding, the position of the maximum intensity is strongly shifted upstream along the beam path, i.e., in the pre-focal region of the bulk semiconductor material. This is physically related to soliton formation provoked by the competition of nonlinear phenomena such as Kerr-induced self-focusing, plasma formation (due to, e.g., multi-photon absorption, avalanche ionization, tunnel ionization, etc.), and plasma defocusing.

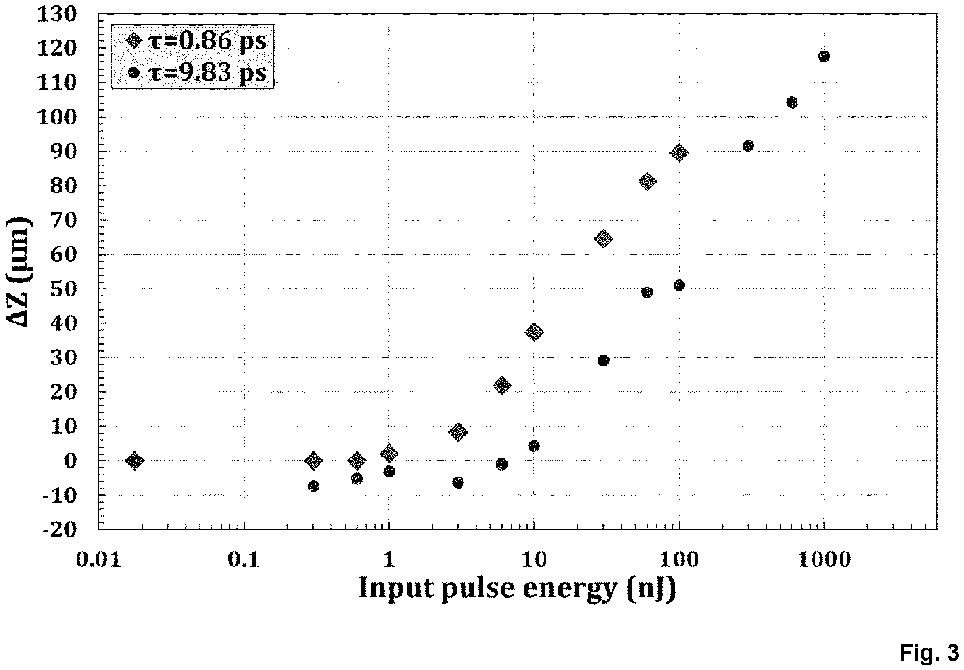

Figure 3 illustrates an experimental quantification of the evolution of the nonlinear propagation-induced shift $\Delta Z$ along the optical axis as a function of the pulse energy (measured in air before the entrance surface of the first workpiece 11). It can be seen from the diagram of Figure 3 that, for 0.86-ps pulses at low energy (i.e., <6 nJ), $\Delta Z$ is close to zero, showing the linear propagation of the laser radiation at these energies. In the energy range 6-100 nJ, $\Delta Z$ monotonically increases with increasing pulse energy, indicating that nonlinear propagation phenomena start to become prominent. A similar behavior is observed for 9.83-ps duration pulses, but shifted toward higher pulse energies. These results demonstrate that, for maximizing the intensity at the exit surface of the semiconductor workpiece 11, i.e. at the interface between the two workpieces 11, 12, simply positioning the geometric beam focus at the interface is not appropriate. The shift $\Delta Z$ along the optical axis has to be taken into account for optimizing the energy deposition at the interface between the semiconductor material of the first workpiece 11 and the opaque material (metal) of the second workpiece 12. To this end, the focus of the laser radiation is (re-)positioned according to the invention during welding so that the intensity maximum is located precisely at the interface such that the two workpieces 11, 12 are optimally bonded.

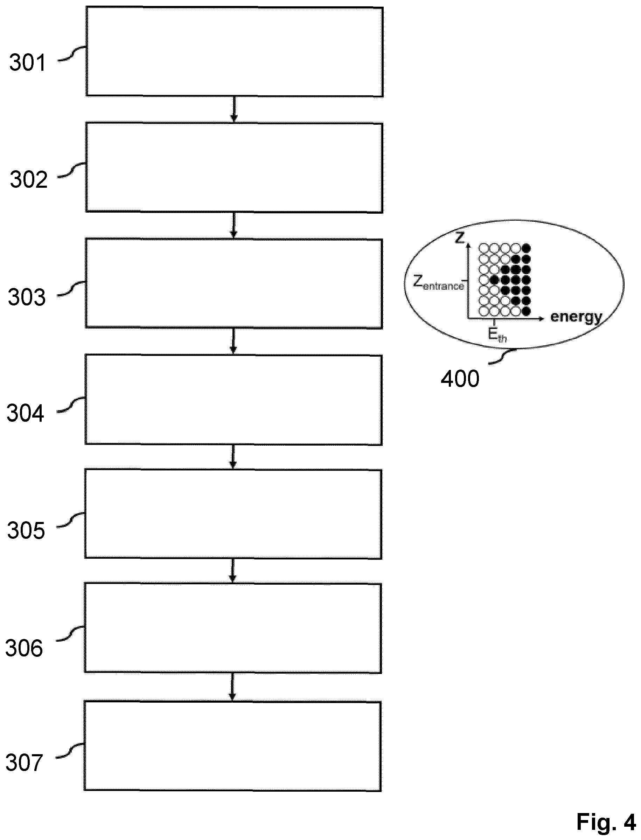

Figure 4 represents a flow chart of an exemplary embodiment of the method of the invention. Firstly, in step 301, the shift $\Delta Z$ of the geometric focus induced by the nonlinear propagation is determined by irradiating the first workpiece 11 only as described above with reference to Figures 2 and 3. In the subsequent step 302 the second workpiece 12 is placed against the first workpiece 11 to bring the two workpieces 11, 12 in mechanical and/or optical contact. Then, in step 303, a calibration of the relative positioning of the laser beam focus and the surfaces of the first workpiece 11 is carried out. To this end, the entrance surface of the first workpiece 11 is observed (using observation device 30, see Figure 1). In this way, the precise position (of the focusing optics 40 or the workpiece 11) along the optical axis Z at which the geometric focus coincides with the entrance surface of the first workpiece 11 is determined (designated as $Z_{entrance}$). This determination can be achieved by a destructive Z-scan procedure schematically illustrated at 400. The Z-scan procedure consists of creating a matrix of irradiated sites on the entrance surface of workpiece 11. The columns of the matrix correspond to different pulse energies, and the lines of the matrix correspond to different Z positions of the focusing optics 40 (or vice-versa). The $Z_{entrance}$ position is the one of the matrix line for which a single damage (black spots in the diagram 400) is observed for a specific pulse energy (corresponding to the damage threshold of the material of the first workpiece 11). The Z-calibration thus results from observation of the damage sites produced at the entrance surface of the first workpiece 11. A (residual) tilt of the workpiece 11 with respect to the focusing optics 40 may exist in practice. This tilt is determined in step 304. While this tilt is usually small (on the order of 1-$\mu$m difference along Z for a displacement of 100 $\mu$m in the X or Y direction), this can lead to a significant error when a mm- or cm-size semiconductor sample has to be welded to an opaque material sample. This is even more pronounced for a high refractive index of the semiconductor material, due to refraction. For example, a 1 mm displacement along Z corresponds to an actual displacement in crystalline silicon of about 3.5 mm at a wavelength of 1300 nm (where the refractive index of silicon is 3.5). In order to irradiate the interface between the two workpieces 11, 12, the thickness and topography of the first workpiece in which the laser radiation propagates has to be taken into account. For example, assuming flat and parallel surfaces of the first workpiece 11 which is tilted with respect to the optical axis, the $Z_{entrance}$ position has to be determined as described above at three different positions. These positions can be chosen, e.g., at the starting point of the laser welding pattern, at the maximum X position, and at the maximum Y position. The knowledge of the three $Z_{entrance}$ positions makes it possible to evaluate a tilt correction $\Delta Z_{tilt}$ at each position in the (X,Y) plane to account for during the laser welding procedure afterwards. Then, the geometric focus is positioned in the Z direction at the interface ($Z_{interface}$ position) between the two workpieces 11, 12 in step 305. This is straightforward after determination of $Z_{entrance}$, knowing the refractive index of the semiconductor material of the first workpiece 11 at the welding wavelength as well as its thickness at different positions along the X and the Y axes. In order to maximize the laser intensity at the $Z_{interface}$ position, the position of the geometric focus is adapted in step 306 according to the pre-determined nonlinear propagation-induced shift $\Delta Z$. In the last step 307 the actual welding takes places, wherein the assembly of the two workpieces 11, 12 is moved in the (X,Y) plane, perpendicular to the optical axis Z, according to a predefined welding pattern, while being irradiated with the pulsed laser radiation.

**Claims**

1. Method for welding a first workpiece (11) to a second workpiece (12) by means of a laser, comprising the steps of:

   - irradiating the first workpiece (11) with a beam of pulsed laser radiation, wherein the first workpiece (11) consists of a semiconductor material which is transparent at the wavelength of the laser radiation, so that the beam enters the first workpiece (11) through an entrance surface and leaves it through an exit surface, the geometric focus of the beam being positioned in the plane of the exit surface;
   - determining a delocalization of the focus caused by nonlinear interaction of the laser radiation with the semiconductor material;
   - placing the second workpiece (12) against the first workpiece (11); and
   - again irradiating the first workpiece (11) with the laser beam of pulsed laser radiation, the focus of the laser radiation being positioned along the beam direction taking into account the determined delocalization so that the intensity maximum is located in the plane of the exit surface forming the interface of the two workpieces (11, 12), whereby the first workpiece (11) is welded to the second workpiece (12).

2. Method of claim 1, wherein the pulse duration of the laser radiation is in the range of 1 fs to 100 ns.

3. Method of claim 1 or 2, wherein the parameters of the laser radiation, specifically the spectrum, the pulse duration, the beam size, as well as the pulse energy, are identical during the determination of the delocalization and during welding the first workpiece to the second workpiece.

4. Method of any one of claims 1-3, wherein the material of the second workpiece (12) is opaque at the wavelength of the laser radiation.

5. Method of claim 4, wherein the material of the second workpiece (12) is a metal, or a semiconductor which is opaque at the wavelength of the laser radiation, or a semiconductor which is transparent at the wavelength of the laser radiation.

6. Method of any one of claims 1-5, wherein the assembly (10) formed by the two workpieces (11, 12) is moved in a plane perpendicular to the laser beam to create a welding pattern.

7. Method of any one of claims 1-6, wherein the focus of the laser radiation is moved along the interface between the two workpieces (11, 12) to create a welding pattern.

8. Method of claim 6 or 7, wherein the intensity of the laser radiation is varied across the welding pattern.

9. System for welding a first workpiece (11) to a second workpiece (12), comprising:

- a laser device (21) configured to generate a beam of pulsed laser radiation;
- a beam controlling device (20) configured to direct the beam through the first workpiece (11) so that the beam enters the first workpiece (11) through an entrance surface and leaves it through an exit surface forming the interface between the two workpieces (11, 12), and to focus the beam at a focus position along the beam path;
- a positioning device (50, 80) configured to position the assembly (10) of the two workpieces (11, 12) and the focus of the laser beam relative to each other, along the direction of the laser beam and in the plane perpendicular thereto, and **characterized by** a measuring device (70) configured to determine a delocalization of the focus caused by nonlinear interaction of the laser radiation within the material of the first workpiece (11),

wherein the measuring device (70) comprises a microscope arranged on the side of the exit surface of the first workpiece (11), the observation direction of the microscope being opposite to the propagation direction of the laser beam.

10. System of claim 9, wherein the beam controlling device (20) is configured to control the parameters of the laser radiation, specifically the spectrum, the pulse duration, the temporal pulse shape, the beam size, the polarization and/or the pulse energy.

11. System of claim 9 or 10, further comprising an observation device (30) configured to inspect the entrance surface of the first workpiece (11).

12. System of any one of claims 9-11, further comprising a conditioning device (60) configured to control the ambient conditions of the assembly (10) of the two workpieces (11, 12).

**Patentansprüche**

1. Verfahren zum Verschweißen eines ersten Werkstücks (11) mit einem zweiten Werkstück (12) mittels eines Lasers, umfassend die Schritte von:

- Bestrahlen des ersten Werkstücks (11) mit einem Strahl gepulster Laserstrahlung, wobei das erste Werkstück (11) aus einem Halbleitermaterial besteht, welches transparent ist bei der Wellenlänge der Laserstrahlung, so dass der Strahl durch eine Eintrittsfläche in das erste Werkstück (11) eintritt und es durch eine Austrittsfläche verlässt, der geometrische Fokus des Strahls in der Ebene der Austrittsfläche positioniert ist;
- Bestimmen einer Delokalisierung des Fokus verursacht durch nichtlineare Wechselwirkung der Laserstrahlung mit dem Halbleitermaterial;
- Platzieren des zweiten Werkstücks (12) an dem ersten Werkstück (11); und
- erneutes Bestrahlen des ersten Werkstücks (11) mit dem Laserstrahl der gepulsten Laserstrahlung, der Fokus der Laserstrahlung wird positioniert unter Berücksichtigung der ermittelten Delokalisierung entlang der Strahlrichtung, so dass das Intensitätsmaximum in der Ebene der Austrittsfläche lokalisiert ist, die die Grenzfläche der beiden Werkstücke (11, 12) bildet, wodurch das erste Werkstück (11) mit dem zweiten Werkstück (12) verschweißt wird.

2. Verfahren nach Anspruch 1, wobei die Pulsdauer der Laserstrahlung im Bereich von 1 fs bis 100 ns liegt.

3. Verfahren nach Anspruch 1 oder 2, wobei die Parameter der Laserstrahlung, spezifisch das Spektrum, die Pulsdauer, die Strahlgröße sowie die Pulsenergie, identisch sind während der Bestimmung der Delokalisierung und während des Verschweißens des ersten Werkstücks mit dem zweiten Werkstück.

4. Verfahren nach einem der Ansprüche 1-3, wobei das Material des zweiten Werkstücks (12) bei der Wellenlänge der Laserstrahlung opak ist.

5. Verfahren nach Anspruch 4, wobei das Material des zweiten Werkstücks (12) ein Metall oder ein Halbleiter ist, welches bei der Wellenlänge der Laserstrahlung opak ist, oder ein Halbleiter, welcher bei der Wellenlänge der Laserstrahlung transparent ist.

6. Verfahren nach einem der Ansprüche 1-5, wobei die aus den beiden Werkstücken (11, 12) gebildete Baugruppe (10) in einer Ebene senkrecht zum Laserstrahl bewegt wird, um ein Schweißmuster zu erzeugen.

7. Verfahren nach einem der Ansprüche 1-6, wobei der Fokus der Laserstrahlung entlang der Grenzfläche zwischen den beiden Werkstücken (11, 12) bewegt wird, um ein Schweißmuster zu erzeugen.

8. Verfahren nach Anspruch 6 oder 7, wobei die Intensität der Laserstrahlung über das Schweißmuster hinweg variiert wird.

9. System zum Verschweißen eines ersten Werkstücks (11) mit einem zweiten Werkstück (12), umfassend:

- eine Laservorrichtung (21) konfiguriert zur Erzeugung eines Strahls gepulster Laserstrahlung;

- eine Strahlsteuerungsvorrichtung (20) konfiguriert zur Lenkung des Strahls durch das erste Werkstück (11), so dass der Strahl durch eine Eintrittsfläche in das erste Werkstück (11) eintritt und es durch eine Austrittsfläche verlässt, die die Grenzfläche zwischen den beiden Werkstücken (11, 12) bildet, und zur Fokussierung des Strahls an einer Fokusposition entlang des Strahlwegs;

- eine Positionierungsvorrichtung (50, 80) konfiguriert zur Positionierung der Baugruppe (10) der beiden Werkstücke (11, 12) und des Fokus des Laserstrahls relativ zueinander entlang der Richtung des Laserstrahls und in der dazu senkrechten Ebene, und

**gekennzeichnet durch** eine Messvorrichtung (70) konfiguriert zur Bestimmung einer Delokalisierung des Fokus verursacht durch nichtlineare Wechselwirkung der Laserstrahlung innerhalb des Materials des ersten Werkstücks (11), wobei die Messvorrichtung (70) ein Mikroskop umfasst angeordnet auf der Seite der Austrittsfläche des ersten Werkstücks (11), die Beobachtungsrichtung des Mikroskops der Ausbreitungsrichtung des Laserstrahls entgegengesetzt ist.

**10.** System nach Anspruch 9, wobei die Strahlsteuerungsvorrichtung (20) konfiguriert ist zur Steuerung der Parameter der Laserstrahlung, spezifisch des Spektrums, der Pulsdauer, der zeitlichen Pulsform, der Strahlgröße, der Polarisation und/oder der Pulsenergie.

**11.** System nach Anspruch 9 oder 10, weiter umfassend eine Beobachtungsvorrichtung (30) konfiguriert zur Untersuchung der Eintrittsfläche des ersten Werkstücks (11).

**12.** System nach einem der Ansprüche 9-11, weiter umfassend eine Konditionierungsvorrichtung (60) konfiguriert zur Steuerung der Umgebungsbedingungen der Baugruppe (10) der beiden Werkstücke (11, 12).

## Revendications

**1.** Procédé de soudage d'une première pièce de fabrication (11) à une seconde pièce de fabrication (12) au moyen d'un laser, comprenant les étapes de:

- irradier la première pièce de fabrication (11) avec un faisceau de rayonnement laser pulsé, dans lequel la première pièce de fabrication (11) étant constituée d'un matériau semi-conducteur qui est transparent à la longueur d'onde du rayonnement laser, de sorte que le faisceau pénètre dans la première pièce de fabrication (11) par une surface d'entrée et la quitte par une surface de sortie, le foyer géométrique du faisceau étant positionné dans le plan de la surface de sortie ;

- déterminer une délocalisation du foyer causée par l'interaction non linéaire du rayonnement laser avec le matériau semi-conducteur ;

- placer la deuxième pièce de fabrication (12) contre la première pièce de fabrication (11) ; et

- irradier à nouveau la première pièce de fabrication (11) avec le faisceau laser de rayonnement laser pulsé, le foyer du rayonnement laser étant positionné le long de la direction du faisceau en tenant compte de la délocalisation déterminée de sorte que le maximum d'intensité soit situé dans le plan de la surface de sortie formant l'interface des deux pièces de fabrication (11, 12), dans lequel la première pièce de fabrication (11) étant soudée à la seconde pièce de fabrication (12).

**2.** Procédé de la revendication 1, dans lequel le durée d'impulsion du rayonnement laser est comprise entre 1 fs et 100 ns.

**3.** Procédé de la revendication 1 ou 2, dans lequel les paramètres du rayonnement laser, spécifiquement le spectre, la durée d'impulsion, la taille du faisceau, ainsi que l'énergie de l'impulsion, sont identiques pendant la détermination de la délocalisation et pendant le soudage de la première pièce de fabrication à la seconde pièce de fabrication.

**4.** Procédé de l'une quelconque des revendications 1-3, dans lequel le matériau de la seconde pièce de fabrication (12) est opaque à la longueur d'onde du rayonnement laser.

**5.** Procédé de la revendication 4, dans lequel le matériau de la seconde pièce de fabrication (12) est un métal, ou un semi-conducteur qui est opaque à la longueur d'onde du rayonnement laser, ou un semi-conducteur qui est transparent à la longueur d'onde du rayonnement laser.

**6.** Procédé de l'une quelconque des revendications 1-5, dans lequel l'assemblage (10) formé par les deux pièces de fabrication (11, 12) est déplacé dans un plan perpendiculaire au faisceau laser pour créer un motif de soudage.

**7.** Procédé selon l'une des revendications 1-6, dans lequel le foyer du rayonnement laser est déplacé le long de l'interface entre les deux pièces de fabrication (11, 12) pour créer un motif de soudage.

8.  Procédé de la revendication 6 ou 7, dans lequel l'intensité du rayonnement laser varie à travers le motif de soudage.

9.  Système de soudage d'une première pièce de fabrication (11) à une seconde pièce de fabrication (12), comprenant:

    - un dispositif laser (21) configuré pour générer un faisceau de rayonnement laser pulsé;
    - un dispositif de contrôle du faisceau (20) configuré pour diriger le faisceau à travers la première pièce de fabrication (11) de sorte que le faisceau pénètre dans la première pièce de fabrication (11) par une surface d'entrée et la quitte par une surface de sortie formant l'interface entre les deux pièces de fabrication (11, 12), et pour focaliser le faisceau à une position de focalisation le long de la trajectoire du faisceau;
    - un dispositif de positionnement (50, 80) configuré pour positionner l'ensemble (10) des deux pièces de fabrication (11, 12) et le foyer du faisceau laser l'un par rapport à l'autre, le long de la direction du faisceau laser et dans le plan perpendiculaire à celui-ci, et
    **caractérisé par** un dispositif de mesure (70) configuré pour déterminer une délocalisation du foyer causée par une interaction non linéaire du rayonnement laser dans le matériau de la première pièce de fabrication (11),
    dans lequel le dispositif de mesure (70) comprend un microscope disposé sur le côté de la surface de sortie de la première pièce de fabrication (11), la direction d'observation du microscope étant opposée à la direction de propagation du faisceau laser.

10. Système de la revendication 9, dans lequel le dispositif de contrôle du faisceau (20) est configuré pour contrôler les paramètres du rayonnement laser, spécifiquement le spectre, la durée de l'impulsion, la forme temporelle de l'impulsion, la taille du faisceau, la polarisation et/ou l'énergie de l'impulsion.

11. Système de la revendication 9 ou 10, comprenant en outre un dispositif d'observation (30) configuré pour inspecter la surface d'entrée de la première pièce de fabrication (11).

12. Système de l'une quelconque des revendications 9-11, comprenant en outre un dispositif de conditionnement (60) configuré pour contrôler les conditions ambiantes de l'ensemble (10) des deux pièces de fabrication (11, 12).

Fig. 1

EP 4 164 833 B1

Fig. 2

Fig. 3

301

302

303

304

305

306

307

400

**Fig. 4**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 20130068384 A1
- EP 2745975 A1

### Non-patent literature cited in the description

- **G. ZHANG ; G. CHENG.** Direct welding of glass and metal by 1 kHz femtosecond laser pulses. *Applied Optics,* 2015, vol. 54 (30), 8957-8961
- **G. ZHANG et al.** Femtosecond laser Bessel beam welding of transparent to non-transparent materials with large focal-position tolerant zone. *Optics Express,* 2018, vol. 26 (2), 917-926
- **S. RICHTER et al.** Toward laser welding of glasses without optical contacting. *Applied Physics A,* 2015, vol. 121 (1), 1-9
- **S. MINGAREEV et al.** Welding of polymers using a 2 $\mu$m thulium fiber laser. *Optics & Laser Technology,* 2012, vol. 44 (7), 2095-2099
- **M. CHANAL et al.** Crossing the threshold of ultrafast laser writing in bulk silicon. *Nature Communications,* 2017, vol. 8 (773
- **CHAMBONNEAU et al.** Competing Nonlinear Delocalization of Light for Laser Inscription Inside Silicon with a 2-$\mu$m Picosecond Laser. *Physical Review Applied,* 2019, vol. 12 (2), 024009
- **E. V. ZAVEDEEV et al.** Delocalization of femtosecond laser radiation in crystalline Si in the mid-IR range. *Laser Physics,* 2016, vol. 26 (1), 016101